# EUROPEAN PATENT APPLICATION

(11) **EP 1 688 946 A2**
(43) Date of publication of application: **09.08.2006**
(21) Application number: 05028113.8
(22) Date of filing: 21.12.2005
(51) Int. Cl.: G11B 20/10, G11B 20/12, G11B 19/20

(54) **Optical disk apparatus**

(30) Priority: 21.12.2004 JP 2004370132
(71) Applicant: Funai Electric Co., Ltd., Daito-shi, Osaka (JP)
(72) Inventor: Nakata, Eiji, Daito-shi Osaka (JP)
(74) Representative: Grünecker, Kinkeldey, Stockmair & Schwanhäusser Anwaltssozietät

(57) **Abstract**

An optical disk apparatus includes: a recording unit for recording data on an optical disk set on an apparatus main body; a temporary data recording unit for temporarily recording target data to be recorded on the optical disk on a non volatile recording medium when the recording unit records the data on the optical disk, and for deleting the target data from the non volatile recording medium after the recording unit completes recording of the data on the optical disk; and a repair unit for commanding the recording unit to record data which remains on the temporary data recording unit without being deleted therefrom when the power source of the apparatus main body is turned on and the optical disk is set on the main body.

## Description

### BACKGROUND OF THE INVENTION

### 1. Field of the Invention

The present invention relates to an optical disk apparatus for recording data on an optical disk such as a CD and a DVD.

### 2. Description of the Related Art

Currently, an optical disk apparatus capable of recording data on an optical disk such as a CD and a DVD has been put to practical use, and the use of the optical disk apparatus has been widely prevailing. There are two types of optical disks on which data can be recorded: one is recordable type (such as CD-R and DVD-R) and the other is rewritable type (such as CD-RW and DVD-RW) . The optical disks of both the recordable type and rewritable type are hereinafter collectively referred to as recordable type optical disks.

A recordable type optical disk has an area where recording management information (RMD) about data recorded on the optical disk is recorded (recording management area: RMA) . The recording management information shows addresses relating to recording start positions and recording end positions for each data recorded in the data area of the optical disk. The recording management information is updated simultaneously with updating of the data recorded on the optical disk on such an occasion as when data is newly recorded on the optical disk.

When recording of recording management information on the optical disk fails, data corresponding to this recording management information contains no recording management information and thus the optical disk apparatus cannot recognize the addresses relating to the recording start positions and recording end positions for that data. As a result, the data is regarded as invalid data and is not reproduced. In other words, when recording of recording management information on the optical disk fails, a user cannot visually and auditorily obtain data corresponding to this recording management information recorded on the optical disk. Additionally, since the optical disk apparatus creates data to be recorded in lead-in and lead-out regions according to recording management information recorded on the optical disk when the optical disk apparatus finalizes the optical disk, the optical disk apparatus which fails to record recording management information also fails to finalize the optical disk.

In order to prevent these situations, an improved type optical disk apparatus has been proposed in JP-A-2002-312940. This optical disk apparatus uses a device which records recording management information for each optical disk in addition to an optical disk drive unit. When an optical disk is set on the optical disk apparatus, recording management information recorded on the recording management area of the optical disk is read out to determine whether the recording management information recorded on the optical disk agrees with recording management information about this optical disk recorded on the device. When disagreement between the two recording management information is found, it is determined that the recording management information has not been recorded on the optical disk and thus the recording management information recorded on the device is recorded on the optical disk. An optical disk apparatus disclosed in JP-A-2002-352522 determines whether target recording management information has been appropriately recorded on an optical disk when recording of that information on the optical disk is completed. If the recording is not appropriately completed, the recording management information is again recorded on the optical disk set on the apparatus main body.

In the structure proposed in JP-A-2002-312940, however, the device other than the optical disk drive unit needs to repeatedly record recording management information for each optical disk. As a result, not only does the recording volume of the device increase, but also longer time is required to determine whether the recording management information recorded on the optical disk set on the apparatus main body agrees with the information recorded on the device as the recording volume increases. Particularly, long time is required to retrieve the recording management information recorded on the device other than the optical disk drive unit or for other operation. This lowers usability of the optical disk apparatus for users.

In the structure proposed in JP-A-2002-352522, if electrical power fails or the user accidentally pulls out the power source cord of the optical disk apparatus by the leg or the like during recording the recording management information on the optical disk, the operation for recording the recording management information on the optical disk stops immediately. As a result, the recording management information having not been recorded on the optical disk cannot be again recorded on the optical disk.

### SUMMARY OF THE INVENTION

It is an object of the invention to provide an optical disk apparatus capable of again recording data such as recording management information on an optical disk, which data has not been recorded on the optical disk due to electrical power failure or accidental pulling of the power source cord of the optical disk apparatus by the user' s leg during recording the data such as recording management information on the optical disk, without lowering usability of the optical disk apparatus for users.

In order to attain the above object, an optical disk apparatus according to the invention has the following structure.

According to a first aspect of the invention, there is provided the optical disk apparatus provided with a recording unit for recording data on an optical disk set on an apparatus main body includes: a temporary data recording unit for temporarily recording target data to be recorded on the optical disk on a non volatile recording medium when the recording unit records the data on the optical disk, and for deleting the target data from the non volatile recording medium after the recording unit completes recording of the data on the optical disk; and a repair unit for commanding the recording unit to record data which remains on the temporary data recording unit without being deleted therefrom when the power source of the apparatus main body is turned on and the optical disk is set on the main body.

In this structure, recording management information or data such as video data and audio data is temporarily recorded on the temporary data recording unit when the recording unit records the data on the optical disk set on the apparatus main body. After the data is recorded on the optical disk, the temporary data recording unit deletes the data which has been temporarily recorded and now recorded on the optical disk. Thus, after the target data is appropriately recorded on the optical disk, the target data having been recorded does not remain on the temporary data recording unit. As a result, the recording volume of the temporary data recording unit can be sufficiently reduced.

When recording of the data on the optical disk fails, the target data having not been recorded remains on the temporary data recording unit. When the optical disk is set on the apparatus and the data to be recorded on the optical disk remains on the temporary data recording unit, the repair unit determines that the data recorded on the temporary data recording unit has not been recorded on the optical disk due to electrical power failure or accidental pulling of the power source cord of the optical disk apparatus by the leg or the like of the user during recording the data or for other reasons. Then, the repair unit commands the recording unit to execute repair process for recording the data recorded on the temporary data recording unit on the optical disk. Since the optical disk which has been set on the apparatus main body when the power source is turned on is the optical disk finally used, the data remaining on the temporary data recording unit without being deleted therefrom is in most cases the data which has not been recorded on the optical disk set on the apparatus main body when the power source is turned on. Thus, even when recording of the data on the optical disk fails, the data which has not been recorded on the optical disk can be securely recorded.

Accordingly, even when electrical power fails or the user accidentally pulls out the power source cord of the optical disk apparatus by the leg or the like during recording data such as recording management information and video data on the optical disk, the data such as recording management information and video data which has not been recorded on the optical disk can be recorded on the optical disk at the next occasion when the power source is turned on. Thus, the situation that the user cannot visually and auditorily obtain the data recorded on the optical disk can be prevented. Furthermore, since the data recorded on the temporary data recording unit is deleted after recording of the data on the optical disk is completed, usability of the apparatus for the user is not lowered.

According to a second aspect of the invention, the temporary data recording unit records identification information for identifying an optical disk where data is recorded while associating this data with the optical disk where this data is recorded. The repair unit commands the recording unit to record data which is associated with the identification information corresponding to the optical disk set on the apparatus main body and remains on the temporary data recording unit without being deleted therefrom when the power source of the apparatus main body is turned on.

In this structure, the repair unit does not command the recording unit to record the data recorded on the temporary data recording unit if, when the power source is turned on, it is determined that the optical disk set on the apparatus main body is not identical to the optical disk on which the data is to be recorded, which data actually has not been recorded but remains on the temporary data recording unit without being deleted therefrom, after execution of particular operation. It is therefore possible to securely prevent the situation that the data, which has not been recorded on another optical disk, is erroneously recorded on the optical disk set on the apparatus main body when the power source is turned on.

According to a third aspect of the invention, the recording unit transfers the target data to the temporary data recording unit so that the temporary data recording unit can record the data on the non volatile recording medium immediately before recording of the data on the optical disk starts.

In this structure, since the recording unit transfers the target data which is going to be recorded on the optical disk to the temporary data recording unit, the data to be recorded on the optical disk can be securely recorded on the temporary data recording unit. Thus, the repair process executed at the time of failure in recording of the data on the optical disk can be appropriately carried out.

According to the optical disk apparatus of the invention, data such as recording management information and video data having not been recorded on an optical disk can be recorded on the optical disk at the next occasion when the power source is turned on even when electrical power fails or the user accidentally pulls out the power source cord of the optical disk apparatus by the leg or the like during recording the data such as recording management data and video data on the optical disk. Thus, the situation that the user cannot visually and auditorily obtain the data recorded on the optical disk can be prevented. Furthermore, since the data recorded on the temporary data recording unit is deleted after recording of the data on the optical disk is completed, usability of the apparatus for the user is not lowered.

### BRIEF DESCRIPTION OF THE DRAWINGS

These and other objects and advantages of this invention will become more fully apparent from the following detailed description taken with the accompanying drawings in which:
Fig. 1 is a block diagram showing a structure of a main part of an optical disk apparatus in an embodiment according to the invention;
Fig. 2 is a flowchart showing recording operation performed at a front end of the optical disk apparatus in the embodiment according to the invention;
Fig. 3 is a flowchart showing recording operation performed at a back end of the optical disk apparatus in the embodiment according to the invention; and
Fig. 4 is a flowchart showing operation when the power source is turned on performed at the front end of the optical disk apparatus in the embodiment according to the invention; and
Fig. 5 is a flowchart showing operation when the power source is turned on performed at the back end of the optical disk apparatus in the embodiment according to the invention.

### DETAILED DESCRIPTION OF THE PREFERRED EMBODIMENTS

An optical disk apparatus in an embodiment according to the invention is hereinafter described.

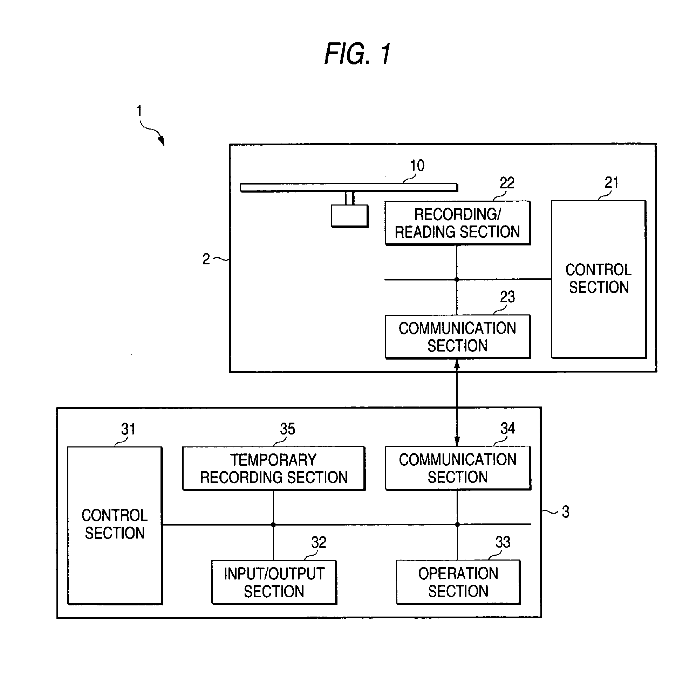

Fig. 1 is a block diagram showing a structure of a main part of the optical disk apparatus according to the invention. An optical disk apparatus 1 in this embodiment includes a front end 2 for recording data on an optical disk 10 and reading data recorded on the optical disk 10, and a back end 3 for receiving data to be recorded on the optical disk 10 from the outside. The front end 2 has a control section 21, a recording/reading section 22 for recording and reading data on and from the optical disk 10, and a communication section 23 for controlling communication with the back end 3. The back end 3 has a control section 31, an input/output section 32 for receiving inputs of signals such as video and audio signals to be recorded on the optical disk 5 and for outputting reproduction signals based on the video data and audio data which are read by the front end 2 from the optical disk 5, an operation section 33 for receiving inputs to the apparatus main body, a communication section 34 for controlling communication with the front end 2, and a temporary recording section 35 on which the front end 2 temporarily records data recorded on the optical disk 10.

The recording/reading section 22 of the front end 2 has a known pickup head (not shown) which applies laser beams to the optical disk 10 and detects the reflected light of the laser beams, a servo controller (not shown) which performs focus servo control for disposing the convergence position of the laser beams applied to the optical disk 10 on the recording surface of the optical disk 10 and tracking servo control for disposing the convergence position of the laser beams at the center of the track, and a reproduction section (not shown) for processing RP signals as reading signals obtained from the optical disk 10. The servo controller receives focus error signals (FE signals) showing the degree of deviation between the convergence position of the laser beams and the recording surface of the optical disk 10, and tracking error signals (TE signals) showing the degree of deviation between the convergence position of the laser beams and the center of the track. The servo controller shifts an objective lens equipped on the pickup head in the direction closer to and away from the recording surface of the optical disk 10 in accordance with the FE signals, and shifts the objective lens equipped on the pickup head in the radial direction of the optical disk 10 in accordance with the TE signals. The communication section 23 receives and transmits data to be recorded on the optical disk 10, data read from the optical disk 10, control commands relating to operation commands given to the back end 3, control commands relating to operation commands received from the back end 3, and others.

An antenna for receiving TV broadcast signals and the like is connected to an input terminal of the input/output section 32 of the back end 3, and broadcasted TV programs are inputted to the antenna. When another optical disk apparatus is connected to the input terminal of the input/output section 32, pictures and sounds reproduced by this optical disk apparatus are inputted thereto. A device provided with a display such as a TV receiving set is connected to an output terminal of the input/output section 32. Pictures and sounds recorded on the optical disk 10 are reproduced at the front end 2, and then outputted through the output terminal of the input/output section 32. Thereafter, the pictures are displayed and the sounds are emitted through the device connected with the output terminal. The operation section 33 has a plurality of operation keys equipped on the apparatus main body, and a remote control receiver for receiving the control commands which have been transmitted by radio such as infrared and radio waves from a not-shown remote control device to be given to the apparatus main body. The operation section 33 also has a display section for displaying operating conditions of the apparatus main body and other components. The communication section 34 receives and transmits data to be recorded on the optical disk 10, data read from the optical disk 10, control commands relating to operation commands given to the front end 2, control commands relating to operation commands received from the front end 2 and others. The temporary recording section 35 is constituted by a non volatile memory, and data recorded on the temporary recording section 35 remains even when the power to the optical disk apparatus 1 main body is cut off. While the temporary recording section 35 constituted by a non volatile memory is discussed in this embodiment, the temporary recording section 35 may be formed by other types of non volatile recording medium such as a hard disk.

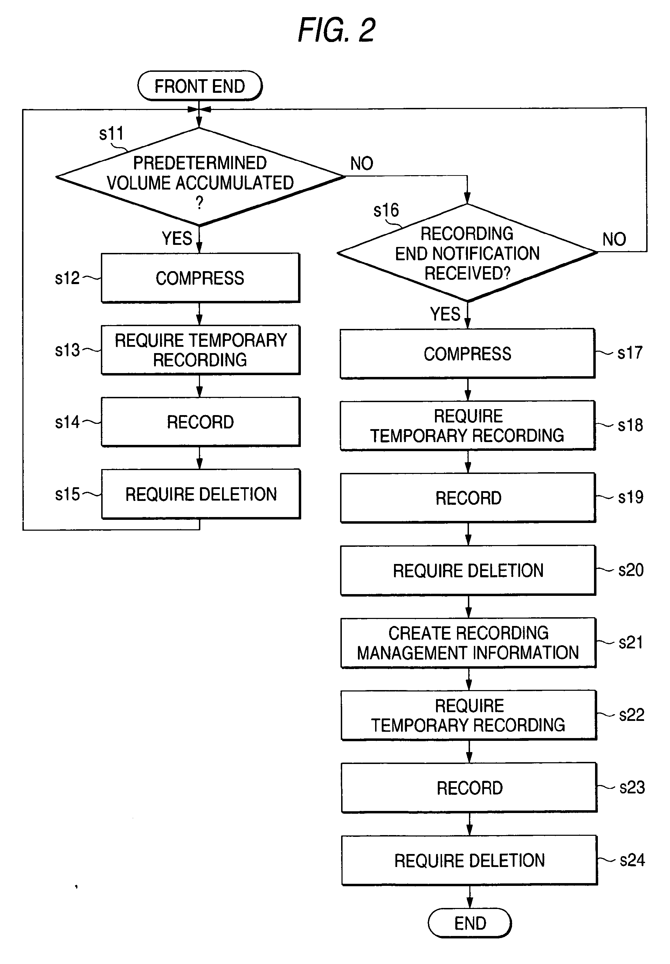

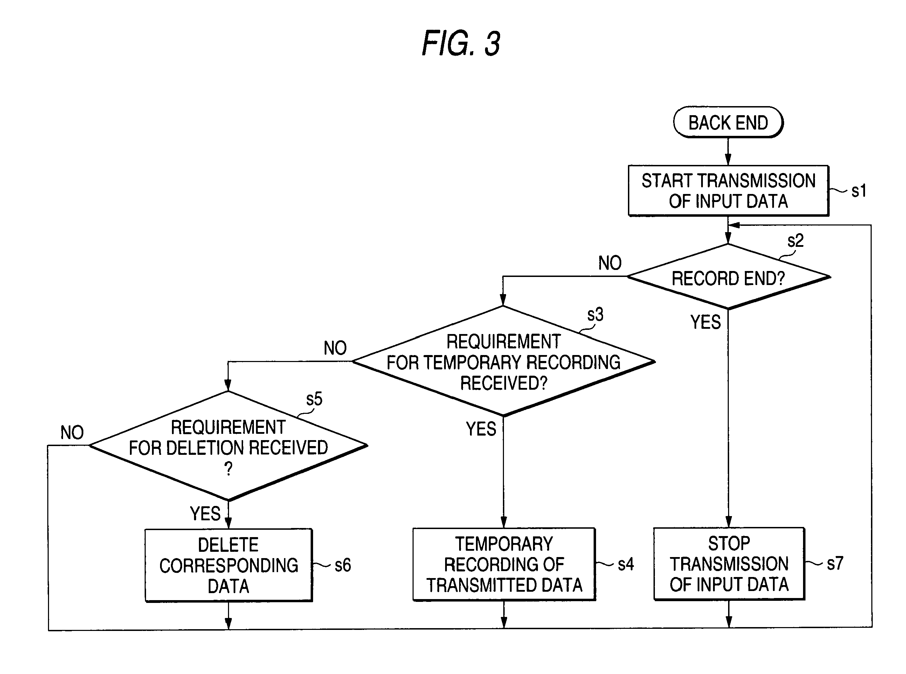

The operation of the optical disk apparatus 1 in the embodiment according to the invention is now explained. Fig. 2 is a flowchart showing the recording operation performed at the front end of the optical disk apparatus in this embodiment. Fig. 3 is a flowchart showing the recording operation performed at the back end of the optical disk apparatus in this embodiment. When receiving input for recording start through the operation section 33, the optical disk apparatus 1 starts the recording operation. Data (video and audio data) to be recorded on the optical disk 10 is inputted through the input terminal of the input/output section 32. The back end 3 transmits video and audio data having been inputted to the input/output section 32 to the communication section 23 of the front end 2 through the communication section 34 until the operation section 33 receives input for recording end (s1 and s2).

The back end 3 executes A/D conversion when the data inputted through the input terminal of the input/output section 32 is analog data, and transmits the converted digital data to the front end 2. The front end 2 compresses the data transmitted from the back end 3 to be recorded on the optical disk 10 by a predetermined compressing method such as MPEG when a certain volume of data is accumulated (s11 and s12). The front end 2 transmits a command requiring the temporary recording section 35 to temporarily record the data compressed in s12 together with the compressed data to the communication section 34 of the back end 3 through the communication section 23 (s13). When receiving the requirement for temporary recording of the data on the temporary recording section 35 from the front end 2 (s3), the back end 3 records this requirement together with the data transmitted from the front end 2 on the temporary recording section 35 (s4).

After completion of the process in s13, the front end 2 records the data compressed in s12 on the optical disk 10 (s14). In the recording process in s14, the pickup head of the recording/reading section 22 applies laser beams to the optical disk 10 to record the data compressed in s12. After recording of the data compressed in s12 is completed, the front end 2 requires deletion of the data having been required to be recorded on the temporary recording section 35 in s13 (s15) and returns to s1l. Thus, while the front end 2 is recording the data on the optical disk 10, the data which is being recorded has been recorded on the temporary recording section 35 of the back end 3. When receiving the requirement for deletion of the data recorded on the temporary recording section 35 from the front end 2, the back end 3 deletes the target data required to be deleted from the temporary recording section 35 (s5 and s6).

As explained above, the data to be recorded on the optical disk 10 set on the apparatus main body is recorded on the temporary recording section 35 of the back end 3 immediately before the data is recorded on the optical disk 10, and the data is deleted immediately after recording of the data on the optical disk 10 is completed.

When receiving input for recording end through the operation section 33, the back end 3 stops transmission of the inputted video and audio data to the front end 2 (s7). Simultaneously, the back end 3 notifies the front end 2 of the recording end. When receiving the notification of the recording end from the back end 3, the front end 2 determines whether all the data having been transmitted from the back end 3 is recorded on the optical disk 10 (s16). If data not yet recorded remains, the front end 2 compresses this data (s17) and transmits a command requiring the temporary recording section 35 to temporarily record the compressed data together with the compressed data to the communication section 34 of the back end 3 through the communication section 23 (s18) . The front end 2 records the data compressed in s17 on the optical disk 10 (s19). In s4, the back end 3 records the data transmitted from the front end 2 on the temporary recording section 35 together with the requirement transmitted from the front end 2 in s18 in response to this requirement.

When all the data transmitted from the back end 3 is recorded on the optical disk 10, the front end 2 requires deletion of the data having been required to be recorded on the temporary recording section 35 in s18 (s20), and creates recording management information relating to the recording of the target data on the optical disk 10 (s21) . After creation of the recording management information, the front end 2 transmits the recording management information created in this step to the communication section 34 of the back end 3 through the communication section 23 together with the command requiring temporary recording of the recording management information on the temporary recording section 35 (s22). In s4, the back end 3 records the data (recording management information) transmitted from the front end 2 on the temporary recording section 35 together with the requirement transmitted from the front end 2 in s22 in response to this requirement.

After completion of the process in s22, the front end 2 records the recording management information created in s21 on the optical disk 10 (s23) . When recording of the recording management information is completed, the front end 2 requires deletion of the recording management information having been required to be recorded on the temporary recording section 35 in s22 (s24) and then the flow ends. In s6, the back end 3 deletes the target recording management information required to be deleted from the temporary recording section 35, and the flow ends.

As described above, the optical disk apparatus 1 in this embodiment records data and recording management information to be recorded on the optical disk 10 on the temporary recording section 35 of the back end 3 before recording the data and recording management information on the optical disk 10 set on the apparatus main body, and deletes the corresponding data recorded on the temporary recording section 35 after recording of the data on the optical disk 10 is completed. Accordingly, even when electrical power fails or the user accidentally pulls out the power source cord of the optical disk apparatus 1 by the leg or the like during recording data on the optical disk 10, the data and recording management information which are being recorded on the optical disk 10, i.e., the data, recording management information and the like which have not been recorded, remain on the temporary recording section 35. Also, since the data having been successfully recorded on the optical disk 10 is promptly deleted from the temporary recording section 35, unnecessary data does not remain on the temporary recording section 35 for a long period of time.

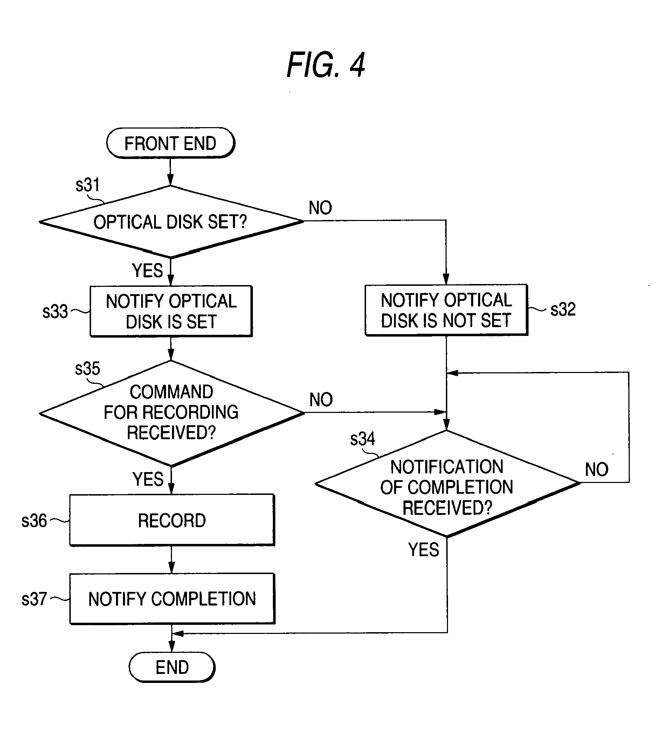

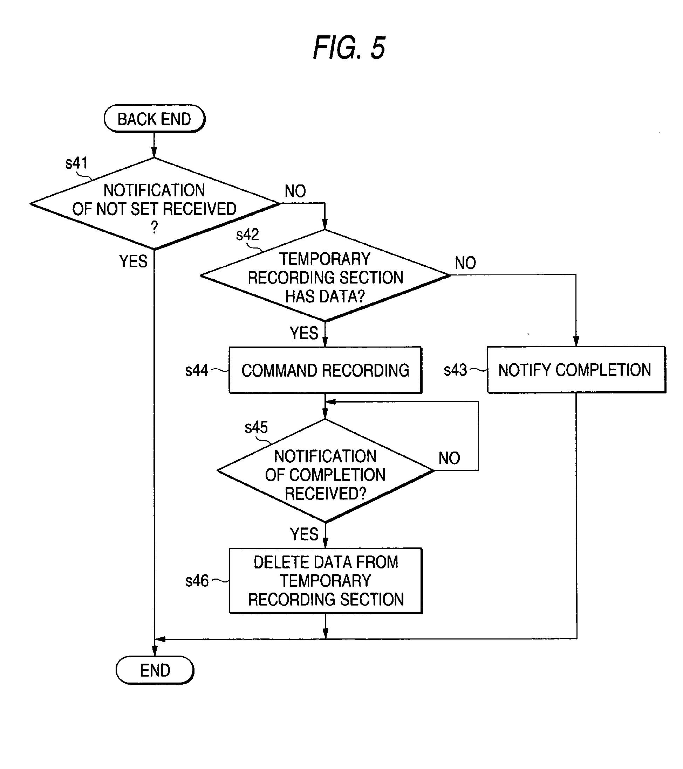

Next, the operation performed by the optical disk apparatus 1 when the power source is turned on is discussed. Fig. 4 is a flowchart showing the operation executed at the front end of the optical disk apparatus when the power source is turned on in the embodiment according to the invention, and Fig. 5 is a flowchart showing the operation executed by the back end of the optical disk apparatus when the power source is turned on in the embodiment according to the invention. When the power source of the optical disk apparatus 1 main body is turned on, the front end 2 and back end 3 start processing shown in Figs. 4 and 5, respectively. First, the front end 2 determines whether the optical disk 10 has been set on the apparatus main body (s31) . If it is determined that the optical disk 10 has not been set in s31, the front end 2 notifies the back end 3 that the optical disk 10 has not been set through the communication section 23 (s32), and the operation performed when the power source is turned on ends. If it is determined that the optical disk 10 has been set on the apparatus main body in s31, the front end 2 notifies the back end 3 that the optical disk 10 has been set on the main body through the communication section 23 (s33). The operation performed when the power source is turned on still continues at this stage.

When receiving the notification that the optical disk 10 has not been set from the front end 2 (s41), the back end 3 ends the operation performed when the power source is turned on. On the other hand, when receiving the notification that the optical disk 10 has been set from the front end 2, the back end 3 determines whether data or management information has been recorded on the temporary recording section 35 (s42). If it is determined that the data or management information has not been recorded on the temporary recording section 35 in s42, the back end 3 notifies the front end 2 of the end of the operation performed when the power source is turned on (s43), and the operation performed when the power source is turned on ends. When receiving notification of the end of the operation performed when the power source is turned on from the back end 3 (s34), the front end 2 ends the operation performed when the power source is turned on.

On the other hand, if it is determined that the data or management information has been recorded on the temporary recording section 35 in s42, the back end 3 commands the front end 2 to record the data or management information recorded on the temporary recording section 35 (s44) . In this recording operation, the optical disk 10 is not taken out from the apparatus main body until the power source is turned on when electrical power fails or the user accidentally pulls out the power source cord by the leg during recording the data or management information. Thus, the data or management information recorded on the temporary recording section 35 of the back end 3 is in most cases the data or management information which has not been recorded on the optical disk 10 set on the apparatus main body when the power source is turned on. For this reason, no problem particularly occurs if the back end 3 commands the front end 2 to record the data having been recorded on the temporary recording section 35 on the optical disk 10 set on the main body when the power is turned on.

When receiving the command for recording the data or management information recorded on the temporary recording section 35 from the back end 3 (s35), the front end 2 records the target data or management information required to be recorded on the optical disk 10 (s36). After recording of the target data or management information required to be recorded is completed, the front end 2 notifies the back end 3 of the completion (s37) and ends the operation performed when the power source is turned on. When receiving the notification that recording of the data or management information required to be recorded in s44 is completed from the front end 2 (s45), the back end 3 deletes the target data, which the front end 2 has recorded on the optical disk 10 in response to the command, from the temporary recording section 35 (s46) and ends the operation performed when the power source is turned on.

After the operation performed when the power source is turned on is completed, operations such as the recording process described above and reproduction process which is not explained herein are performed.

As described above, the optical disk apparatus 1 records data on the optical disk 10 set on the apparatus main body when the power source is turned on if the data remains on the temporary recording section 35 of the back end 3 when the power source is turned on. Thus, even when electrical power fails or the user accidentally pulls out the power source cord of the optical disk apparatus 1 by the leg or the like during recording data on the optical disk 10, the data or recording information which is being recorded on the optical disk 10 can be recorded on the optical disk 10 at the next occasion when the power source is supplied. Accordingly, losses caused due to failure in recording of data or recording management information on the optical disk 10 can be reduced.

Since identification information for identifying each optical disk is recorded on the optical disk 10, the data to be recorded on the temporary recording section 35 may be recorded thereon while being associated with the identification information for identifying the optical disk 10. In this case, data or management information associated with the identification code of the optical disk 10 set on the apparatus main body when the power source is turned on may be required to be recorded on the optical disk 10 in case that this data or management information has been recorded on the temporary recording section 35.

## Claims

1. An optical disk apparatus comprising:
a recording unit for recording data on an optical disk set on an apparatus main body;
a temporary data recording unit for temporarily recording target data to be recorded on the optical disk on a non volatile recording medium when the recording unit records the data on the optical disk, and for deleting the target data from the non volatile recording medium after the recording unit completes recording of the target data on the optical disk; and
a repair unit for commanding the recording unit to record data which remains on the temporary data recording unit without being deleted therefrom when the power source of the apparatus main body is turned on and the optical disk is set on the main body, wherein:
the temporary data recording unit records identification information for identifying an optical disk where data is recorded while associating this data with the optical disk where this data is recorded;
the repair unit commands the recording unit to record data which is associated with the identification information corresponding to the optical disk set on the apparatus main body and remains on the temporary data recording unit without being deleted therefrom when the power source of the apparatus main body is turned on; and
the recording unit transfers the target data to the temporary data recording unit so that the temporary data recording unit can record the data on the non volatile recording medium immediately before recording of the data on the optical disk starts.

2. An optical disk apparatus comprising:
a recording unit for recording data on an optical disk set on an apparatus main body;
a temporary data recording unit for temporarily recording target data to be recorded on the optical disk on a non volatile recording medium when the recording unit records the data on the optical disk, and for deleting the target data from the non volatile recording medium after the recording unit completes recording of the data on the optical disk; and
a repair unit for commanding the recording unit to record data which remains on the temporary data recording unit without being deleted therefrom when the power source of the apparatus main body is turned on and the optical disk is set on the main body.

3. An optical disk apparatus according to claim 2, wherein:
the temporary data recording unit records identification information for identifying an optical disk where data is recorded while associating this data with the optical disk where this data is recorded; and
the repair unit commands the recording unit to record data which is associated with the identification information corresponding to the optical disk set on the apparatus main body and remains on the temporary data recording unit without being deleted therefrom when the power source of the apparatus main body is turned on.

4. An optical disk apparatus according claim 2, wherein
the recording unit transfers the target data to the temporary data recording unit so that the temporary data recording unit can record the data on the non volatile recording medium immediately before recording of the data on the optical disk starts.
